(19) Europäisches Patentamt
European Patent Office
Office européen des brevets

(11)  **EP 2 651 998 B1**

(12)  **EUROPEAN PATENT SPECIFICATION**

(45) Date of publication and mention
of the grant of the patent:
**21.01.2015  Bulletin 2015/04**

(21) Application number: **11794788.7**

(22) Date of filing: **15.12.2011**

(51) Int Cl.:
*C08G 18/10* *(2006.01)*      *C08G 18/40* *(2006.01)*
*C08G 18/42* *(2006.01)*      *C08G 18/48* *(2006.01)*
*C08G 18/66* *(2006.01)*      *C08J 9/14* *(2006.01)*
*C08J 9/00* *(2006.01)*       *E01B 1/00* *(2006.01)*
*C08G 101/00* *(2006.01)*

(86) International application number:
**PCT/EP2011/072930**

(87) International publication number:
**WO 2012/080406 (21.06.2012 Gazette 2012/25)**

(54) **A POLYURETHANE RAILWAY TRACK BED, A PREPARING METHOD AND THE USAGE THEREOF**

EIN POLYURETHAN-EISENBAHNGLEISBETT, SEIN HERSTELLUNGSVERFAHREN UND SEIN EINSATZ

VOIE FERREÉ SUPPORTÉE PAR UN LIT DE POLYURÉTHANE, SON PROCÉDÉ DE PRÉPARATION ET SON USAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **16.12.2010  CN 201010596943**

(43) Date of publication of application:
**23.10.2013  Bulletin 2013/43**

(73) Proprietor: **BIP Patents**
**40789 Monheim (DE)**

(72) Inventors:
• **ZHANG, Chen Xi**
**Singapore 659636 (SG)**
• **ZHAO, Hui**
**Shanghai 200010 (CN)**
• **SHEN, Yi**
**Shanghai 201100 (CN)**
• **SUN, Gang**
**Shanghai 200240 (CN)**

(74) Representative: **BIP Patents**
**c/o Bayer Intellectual Property GmbH**
**Creative Campus Monheim**
**Alfred-Nobel-Straße 10**
**40789 Monheim (DE)**

(56) References cited:
CH-A5- 595 512          US-A1- 2007 172 590
US-A1- 2008 173 724

• **DATABASE WPI Week 200622 Thomson Scientific, London, GB; AN 2006-207588 XP002671112, & JP 2006 063150 A (SEKISUI CHEM IND CO LTD) 9 March 2006 (2006-03-09)**

EP 2 651 998 B1

**Description**

**Field Of The Invention**

The present invention relates to a polyurethane railway track bed, particular to a method for preparing the same and railway facility comprising the same.

**Background Of The Invention**

Railway track bed generally refers to the ballast layer laid between sleepers and a railway subgrade. The railway track bed is mainly used to support the sleepers and disperse the heavy load of railway vehicles transferring from the sleepers and the rails onto the surface of the subgrade, thus reducing the subgrade deformation and ensuring traffic safety. Furthermore, ballasts have an effect of cushioning and absorbing shock, and a railway track bed prepared from ballasts has good universality and low construction cost, thus being widely used.

A ballast railway track bed has a high repairing cost and needs to be maintained periodically. Furthermore, it needs to be repaired periodically by using large repairing machines only during "skylight period" or when traffic is stopped. Vibration transferring from sleepers will lead to ballasts in the railway track bed changing their positions, abrading their sharp edges and finally destructing. Moreover, outer coals, dusts, sands and wastes will enter into the pile-structure of ballasts, causing some serious safety problems, such as track bed hardening, and more seriously track bed subsidence, mud pumping or breaking of the sleepers or the rails.

Now, various methods using polymer materials have been applied to fix ballast bed. For example, US 2007172590A has disclosed a process of preparing a ballast bed. The ballast bed consists of ballasts and polyurethane foam, which is the reaction product of isocyanates and isocyanate-reactive compounds. DE 2305536A has disclosed a method of pouring reaction components of polyurethane into the voids in the ballasts, foaming and curing to fix the ballast bed.

There are some special requirements for the environment, under which the polyurethane is poured on site for preparing polyurethane ballast bed. When the environment is in wet condition, a drying machine must be used to dry the bed at first. Moreover, most of the polyol materials used in this method are polyether polyols, as polyurethane foam based on polyester polyols is easily hydrolyzed and the hydrolyzed foam has much lower physical and mechanical properties. Therefore, there is a need to greatly shorten the maintenance cycle of a ballast bed, or it will bring serious potential problems for the safety of railway transportation.

**Summary Of The Invention**

One object of the present invention is to provide a method for preparing polyurethane molding railway track bed. According to one embodiment of the present invention, the method comprises a step of setting a molding polyurethane layer on a railway subgrade, wherein said molding polyurethane layer comprises ballasts and molding polyurethane foam, said ballasts are distributed in said molding polyurethane foam, and said molding polyurethane foam is a product by mixing the components of a first reaction system comprising:

1a) one or more polyisocyanates having a general formula of $R(NCO)_n$, wherein, R is an aliphatic alkyl group having 2-18 carbon atoms, an aromatic alkyl group having 6-15 carbon atoms or an araliphatic alkyl group having 8-15 carbon atoms, n=2-4;
1b) one or more polyols having an average molecular weight of 100-10000 and a functionality of 2-4;
1c) one or more chain extenders; and
1d) 0.3-15 % of one or more blowing agents, based on 100 % by weight of 1b and 1c;
wherein, the density of said molding polyurethane layer is 200-1200 $kg/m^3$, the hardness of said molding polyurethane layer is 5 Asker C-80 Shore D, and the tensile strength of said molding polyurethane layer is 0.3-60 MPa.

Preferably, said polyols are selected from the group consisting of polyether polyol, polyester polyol, polycarbonate polyol, polycaprolactone polyol and polytetrahydrofuran polyol.

Preferably, said molding polyurethane layer further comprises reinforcement material.

Preferably, said method further comprises a step of pouring or spraying a second reaction system comprising following reaction components onto the surface of said molding polyurethane layer set on said railway sub grade to form a polyurethane foam layer:

2a) one or more polyisocyanates having a general formula of $R(NCO)_n$, wherein, R is an aliphatic alkyl group having 2-18 carbon atoms, an aromatic alkyl group having 6-15 carbon atoms or an araliphatic alkyl group having 8-15 carbon atoms, n=2-4;

2b) one or more polyols having an average molecular weight of 200-10000 and a functionality of 2-6;

2c) one or more chain extenders; and

2d) 0-15 wt.% of one or more blowing agents, based on 100 % by weight of 2b and 2c.

Preferably, said polyols are selected from the group consisting of polyether polyol, polyester polyol, polycarbonate polyol, polycaprolactone polyol and polytetrahydrofuran polyol.

Preferably, said method comprises a step of setting a ballast mat layer and/or a drainage layer between said railway subgrade and said molding polyurethane layer.

Another object of the present invention is to provide a polyurethane railway track bed, which comprises a railway subgrade and a molding polyurethane layer, wherein said molding polyurethane layer comprises ballasts and molding polyurethane foam, said ballasts are distributed in said molding polyurethane foam, said molding polyurethane foam is a product by mixing components of a first reaction system comprising:

1a) one or more polyisocyanates having a general formula R(NCO)n, wherein, R is an aliphatic alkyl group comprising 2-18 carbon atoms, an aromatic alkyl group comprising 6-15 carbon atoms or an araliphatic alkyl group having 8-15 carbon atoms, n=2-4;

1b) one or more polyols having an average molecular weight of 100-10000 and a functionality of 2-4;

1c) one or more chain extenders; and

1d) 0-15 wt.% of one or more blowing agents, based on 100 % by weight of 1b and 1c;

wherein, the density of said molding polyurethane layer is 200-1200 $kg/m^3$, the hardness of said molding polyurethane layer is 5 Asker C-80 Shore D, and the tensile strength of said molding polyurethane layer is 0.3-60 MPa.

Preferably, said polyols are selected from the group consisting of polyether polyol, polyester polyol, polycarbonate polyol, polycaprolactone polyol and polytetrahydrofuran polyol.

Preferably, the molding polyurethane layer further comprises reinforcement materials.

Preferably, said polyurethane railway track bed further comprises a polyurethane foam layer, which is a product by mixing the components of a second reaction system comprising:

2a) one or more polyisocyanates having a general formula $R(NCO)_n$, wherein R is an aliphatic alkyl group having 2-18 carbon atoms, an aromatic alkyl group having 6-15 carbon atoms or an araliphatic alkyl group having 8-15 carbon atoms, n=2-4;

2b) one or more polyols having an average molecular weight of 200-10000 and a functionality of 2-6;

2c) one or more chain extenders; and

2d) 0-15 wt.% of one or more blowing agents, based on 100 % by weight of 2b and 2c.

Preferably, said polyols are selected from the group consisting of polyether polyol, polyester polyol, polycarbonate polyol, polycaprolactone polyol and polytetrahydrofuran polyol.

Preferably, said polyurethane railway track bed comprises a ballast mat layer and/or a drainage layer set between said railway subgrade and said molding polyurethane layer.

Preferably, said drainage layer can be a drainage mat or one or more transversely or longitudinally arranged drainage grooves and/or ditches.

Yet another object of the present invention is to provide a use of the polyurethane railway track bed of the present invention in constructing or maintaining a railway facility.

Still another object of the present invention is to provide a railway facility which comprises a polyurethane railway track bed of the present invention, a rail, several sleepers, and said sleepers are set on said polyurethane railway track bed, said rail are set on said sleepers.

According to the method provided in the present invention, special requirements for environment, under which the polyurethane is poured on site, can be avoided by laying a prefabricated molding polyurethane layer on the railway track bed. Second, molding polyurethane layer with various density and/or hardness can be prepared according to practical needs of different railway track bed and laid on railway track bed to bring about the accurately descending or ascending of the density and/or hardness of certain railway track bed. Third, a polyurethane foam layer can be poured on a molding polyurethane layer which is laid on railway subgrade to accurately set the height and/or inclination of the bed according to practical needs. Furthermore, a ballast mat layer and/or drainage layer can be laid on railway track bed before laying the molding polyurethane layer to improve the service life and shock-absorbing effect of the railway track bed.

**Description of Drawings**

The figures are illustrative only and not intended to be limiting.

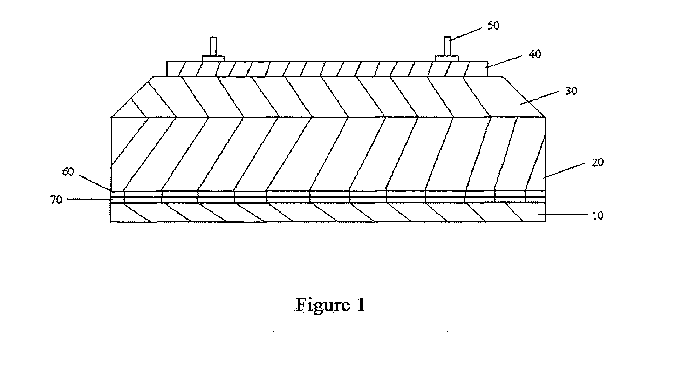

Figure 1 is a schematic representation of a cross section view of a polyurethane railway track bed according to one embodiment of the present invention.

**Detailed Description Of The Invention**

According to the method provided by the present invention, special requirements for the environment, under which the polyurethane is poured on site, can be avoided by laying a molding polyurethane layer on the railway track bed to produce a molding polyurethane layer railway track bed, and it doesn't need to pre-dry the railway track bed with drying equipment, even if the construction site where railway track bed being laid is in wet condition.

Figure 1 is a schematic representation of a cross section view of a polyurethane railway track bed according to one embodiment of the present invention. With figures to further elaborate the details of the present invention.

The molding polyurethane layer 20 with various density and/or hardness can be laid on railway subgrade 10 according to different practical needs of railway track bed. For example, the ballast-free track of a high speed railway has high stiffness, thus the bridge with a long ballast-free track will be damaged due to bearing the big impact produced when a train passes the bridge in high speed. So, the train should slow down or lay a ballast bed on the bridge to reduce the impact to the bridge. The molding polyurethane layer 20 of the present invention can be laid on the railway subgrade 10 before the bridge with the density and/or hardness descending from those of ballast-free bed to ballast bed, and railway subgrade 10 after the bridge with the density and/or hardness ascending from those of ballast bed to ballast-free bed. By this method, it can accurately set the density and/or hardness of certain railway track bed and reduce the sudden change of density and/or hardness of the railway track bed, thus improving the safety of railway transportation.

Furthermore, after the molding polyurethane layer 20 of the present invention is laid on the subgrade 10, a polyurethane foam layer 30 can be poured on the molding polyurethane layer 20, so that the height and/or inclination of the railway track bed can be set accurately according to the practical needs.

Between subgrade 10 and the molding polyurethane layer 20, a ballast mat layer 60 and/or drainage layer 70 can also be set to reduce the possibilities of hydrolyzation of the polyester polyurethane in wet conditions and improve the service life of the railway track bed. According to actual situations, the drainage layer 70 may be a drainage mat or one or more transversely or longitudinally arranged drainage grooves and/or ditches. The drainage layer 70 may further improve the drainage capability of the railway track bed, reduce the possibilities of hydrolyzation of the polyester polyurethane in wet conditions and improve the service life of the railway track bed.

Further, the present invention provides a railway facility, which comprises: the polyurethane railway track bed of the present invention, a rail (including fasteners) 50, a plurality of sleepers 40, the sleepers 40 are laid on the polyurethane railway track bed, and the rails (including fasteners) 50 are laid on the sleepers 40.

Process of preparing molding polyurethane layer

According to a process of preparing a polyurethane railway track bed of the present invention, sufficient ballasts are loaded into a mold, and tamped with vibrators or compressors to meet the related requirements of the ballast railway. Then, the first reaction system is poured into the mold, foamed and cured to produce a molding polyurethane layer.

The mold can be those that have been used in the existing technologies for preparing molding polyurethane. Preferably, the mold is made from metal or epoxy resin.

Regarding the first reaction system, please refers to the first reaction system.

Before pouring the first reaction system into the mold, a drainage mat and/or ballast mat with a thickness of 2-30mm may be laid on the bottom of the mold.

The drainage mat and/or ballast mat is preferably, but not limit to rubber based granulated compress bonding material, rubber based strip compress bonding material and plastics. The drainage mat and ballast mat may be made from the same or different material, for example, the ballast mat is made from rubber, while the drainage from plastics.

According to the actual necessity, the molding polyurethane layer may further comprise reinforcement material. The reinforcement material is preferably, but not limit to, reinforced fibre cloth, fibre yarn, fibre felt, metal pipe, metal frame, fibre reinforced plastics, polymer and/or fibre composites; the metal pipe is preferably, but not limited to, iron pipe and steel pipe; the metal frame is preferably, but not limited to, iron frame, steel frame and stainless steel frame; the fibre reinforced plastics (FRP) are preferably, but not limited to, carbon fibre reinforced plastic; the polymer/fibre composites are preferably, but not limited to, polyurethane/fibre composites, epoxy resin/fibre composites, unsaturated resin/fibre composites, ethylene resin/fibre composites.

The reinforcement material may be set outside of the molding polyurethane layer, a non-limiting example of which can be that the reinforced fibre cloth is set outside of the molding polyurethane layer. The reinforcement material may be set inside of the molding polyurethane layer, a non-limiting example of which can be that the reinforced fibre cloth is set inside of the molding polyurethane layer.

The process of preparing polyurethane foam layer

Preferably, the second reaction system may be poured or spayed on the surface of the molding polyurethane layer to produce a polyurethane foam layer. The height and/or inclination of the polyurethane foam layer can be set accurately according to the practical need of the environment, thereby the height and/or inclination of railway track bed being set accurately.

Regarding to the second reaction system please refers to the second reaction system.

The second reaction system may be poured or spayed on the surface of the molding polyurethane layer to produce a polyurethane foam layer. As shown in Figure 1, the second reaction system was on site-poured or spayed on the surface of the molding polyurethane layer 20, which is laid on the railway track bed 10, thereby producing the polyurethane foam layer 30.

Under special circumstances, the height of the molding polyurethane layer can be determined according to practical needs and can be appropriately reduced to improve on site-working flexibility.

The first reaction system

The first polyurethane reaction system disclosed in the present invention is preferable but not limit to, single component, two components and multi components polyurethane reaction system, more preferably two components polyurethane reaction system.

The two components polyurethane reaction system includes A1 component mainly composed by polyisocyanates and B1 component mainly composed by chemical with isocyanate-reactive groups.

The A1 component mainly comprises one or more kinds of polyisocyanates, the polyisocyanates can be represented by general formula, $R(NCO)_n$, wherein R represents the aliphatic alkyl group having 2-18 carbon atoms, or aromatic alkyl group having 6-15 carbon atoms, or araliphatic alkyl group having 8-15 carbon atoms, n=2-4.

The polyisocyanates can be selected from, but not limited to, ethylene diisocyanate, 1,4-tetramethylene diisocyanate, hexamethylene diisocyanate, 1,2-dodecane diisocyanate, cyclobutane-1,3- diisocyanate, cyclohexane-1,3-diisocyanate, cyclohexane-1,4-diisocyanate, 1- isocyanate-3,3,5-trimethyl-5-isocyanate cyclohexane, 2,4-hexahydro toluene diisocyanate, 1,3-hexahydro phenyl diisocyanate, 1,4-hexahydro phenyl diisocyanate, perhydrogenated diphenylmethane-2,4- diisocyanate, perhydrogenated diphenylmethane-4,4-diisocyanate, phenylene 1,3- diisocyanate, phenylene 1,4-diisocyanate, dureene-1,4-diisocyanate, 3,3-dimethyl-4,4-diphenyl diisocyanate, methyl-2,4-diisocyanate(TDI), methyl-2,6-diisocyanate(TDI), diphenylmethane-2,4' -diisocyanate(MDI), diphenylmethane-4,4' -diisocyanate(MDI), naphthylene-1,5- diisocyanate(NDI), the mixtures thereof, the isomer thereof, the mixtures of them and the isomer thereof.

The polyisocyanate may also include polyisocyanate modified by carbon diamine, allophanate and isocyanate, is preferably but not limited to diphenylmethane diisocyanate modified by diphenylmethane diisocyanate and allophanate, their compound, their isomer, the compounds of polyisocyanate and their isomer.

The polyisocyanates, also can use isocyanate prepolymer. The method of making the isocyanate prepolymer is well-known in technical field. The prepolymer NCO% is, preferably but not limit to 3-31 wt.%, more preferably 5-30 wt.%, most preferably 8-29 wt.%.

The B1 component mainly comprise of (1b) polyol, (1c) chain extender and (1d) blowing agent.

The polyol can be one polyol or mixtures of different polyol. The average molecular weight of the polyol is, preferably 100-10000, more preferably 150-6000; the functionality is preferably 2-4.

The polyol is preferably small molecular weight polyol, polyester polyol, polyether polyol, polycarbonate polyol, PTMEG and their mixtures.

The small molecular weight polyol is, preferably ethylene glycol, 1,2-propylene glycol, 1,3-propylene glycol, diethylene glycol, TMP and their mixtures.

The polyether polyols may be produced by known process, e.g. in the reaction of alkene oxides with polyhydric alcohol starters in the presence of catalysts such as alkali hydroxides, alkali alkoxides, antimony pentachloride, or boron fluoride etherate. Examples of the alkene oxides include tetrahydrofuran, ethylene oxide, 1,2-propylene oxide, 1,2-and 2,3-butylene oxide, and styrene oxide. The polyether polyols preferably have primary OH terminal groups, and secondary OH groups may also exist. The suitable starter molecules may be selected from polyhydric compounds, such as water, ethylene glycol, 1,2-and 1,3-propanediols, 1,4-butanediol, diethylene glycol, trimethylol-propane. The polyether polyol molecular weight is 200-8000, preferably 500-6000, the functionality is 2-6, preferably 2-4. The polyether polyol is, preferably poly(propylene oxide) polyol, poly(ethylene oxide) polyol, PTMEG and their mixtures.

The polyester polyols may be produced from the reaction of organic dicarboxylic acids or dicarboxylic acid anhydrides with polyhydric alcohols. The dicabrboxylic acids are, preferably aliphatic carboxylic acids containing 2 to 12 carbon atoms, for example, succinic acid, malonic acid, glutaric acid, adipic acid, suberic acid, azelaic acid, sebacic acid, decane-dicarboxylic acid, maleic acid, fumaric acid, phthalic acid, isophthalic acid, and terephthalic acid. The dicarboxylic acids can be used both individually and as their compounds. The suitable anhydrides are, for example, phthalic anhydride, terachlorophthalic anhydride, and maleic anhydride. Representative polyhydric alcohols include ethanediol, diethylene glycol, 1,2-and 1,3-propanediols, dipropylene glycol, 1,3-methylpropanediol, 1,4-butanediol, 1,5-pentanediol, 1,6-hexanediol, neopentyl glycol, 1,10-decanediol, glycerol, trimethylol-propane, or compounds of at least two of these diols. Polyester polyols of lactones, for example, $\varepsilon$-caprolactone, can also be used.

The polycarbonate polyols include those prepared by the reaction of diols, such as 1,3-propanediol, 1,4-butanediol, 1,6-hexanediol, diethylene glycol, trioxymethylene glycol and their mixtures. The dialkyl or diaryl-carbonates are preferably, but not limited to, diphenyl carbonate.

The average molecular weight of the PTMEG is preferably 200-4000, more preferably 500-3000; functionality is preferably 2-6, more preferably 2-3.

The chain extenders typically are selected from active hydrogen atoms comprising compounds with molecular weights lower than 800, preferably from 18 to 400. The active hydrogen atoms comprising compounds are preferably, but are not limit to alkanediols, dialkylene glycols, and polyalkylene polyols and their mixtures. The examples are ethanediol, 1,4-butanediol, 1,6-hexanediol, 1,7-heptanediol, 1,8-octanediol, 1,9-nonanediol, 1,10-decanediol, diethylene glycol, dipropylene glycol, and polyoxyalkylene glycols. Other suitable substances are branched chain and unsaturated alkanediols such as 1,2-propanediol, 2-methyl-1,3-propanedio1,2,2-dimethyl-1,3-propanediol, 2-butyl-2-ethyl-1,3-propanediol, 2-butene-1,4-diol and 2-butyne-1,4-diol, alkanolamines and N-alkyldialkanolamines such as ethanolamine, 2-aminopropanol and 3-amino-2,2-dimethylpropanol, N-methyl and N-ethyl-diethanolamines, as well (cyclo) aliphatic and aromatic amines, e.g. 1,2 ethylenediamine, 1,3-propylenediamine, 1,4-butylenediamine, 1,6-hexamethylenediamine,isophoronediamine, 1,4-cyclohexamethylenediamine, N,N' -diethyl-phenylenediamine, and 2,4 and 2,6 diaminotolune. The chain extender dosage is 0-40 wt.%, preferably 0-25 wt.%, more preferably 0-20wt.%, the dosage is based on 100 wt.% of component B 1.

The B1 component can also comprise blowing agent and catalyst.

The blowing agent can be selected from water, halohydrocarbon and hydrocarbon and gas. The halohydrocarbon is preferably, but not limited to, monochlorodifuloromethane, dichloromonofluoromethane, dichlorofluoromethane, trichlorofluromethane and the mixtures thereof. The hydrocarbon is preferably, but not limited to butane, pentane, cyclopentane, hexane, cyclohexane, heptane and the mixtures thereof. The gas is preferably, but not limited to, air, carbon dioxide, nitrogen and mixtures thereof. The amount of the blowing agent is 0.3-15 wt.%, based on 100 wt.% of component 1b and 1c.

The catalyst is preferably, but not limited to, amines and organic metal compounds and their mixtures. The amine catalyst is preferably, but not limited to, triethylamine, tributylamine, triethylene diamine, N-ethylmorpholine, N,N,N',N'-tetramethyl-ethylenediamine, pentamethyl diethylene-triamine, N,N-methylaniline, N,N-dimethylaniline and mixtures thereof. The organic metal catalyst is preferably, but not limit to, stannous diacetate, stannous dioctoate, stannous diethylhexoate, and dibutyltin diacetate, dibutyltin dilaurate, ditutyltin maleate, and dioctyltin diacetate and mixtures thereof. The catalyst dosage is 0.001-10wt.% of the dosage, based on 100 wt.% of component 1b and 1c.

The molding polyurethane layer provided by the present invention is the product of the first reaction system, the NCO index of the reaction is 70-130, the NCO index is defined as:

$$X(\%) = \frac{[\text{moles number of isocyanate group in A componentl}]}{[\text{moles number of isocyanate} - \text{reactive group in B component}]} \times 100\%$$

The density of the molding polyurethane layer is 200-1200 kg/m$^3$, tensile strength is 0.3-60 MPa, elongation at break is 5-750 %.

The hardness of the molding polyurethane layer is 5 Asker C-80 Shore D, wherein the hardness refers to 4 hardness units from lower to higher, Asker C, Shore A, Shore B, Shore D.

The second reaction system

The second polyurethane reaction system disclosed in the present invention is preferably, but not limit to, single component, two components and multi components polyurethane reaction system, more preferably two components polyurethane reaction system.

The two components polyurethane reaction system includes A2 component mainly comprising polyisocyanates and B2 component mainly comprising polyols.

The A2 component mainly comprises one or more kinds of polyisocyanates, and the polyisocyanates can be represented by general formula, $R(NCO)_n$, wherein R represents the aliphatic alkyl group having 2-18 carbon atoms, or aromatic alkyl group having 6-15 carbon atoms, or araliphatic alkyl group having 8-15 carbon atoms, n=2-4.

The polyisocyanates can be selected from, but is not limited to, ethylene diisocyanate, 1,4-tetramethylene diisocyanate, hexamethylene diisocyanate, 1,2-dodecane diisocyanate, cyclobutane-1,3- diisocyanate, cyclohexane-1,3-diisocyanate, cyclohexane-1,4-diisocyanate, 1- isocyanate-3,3,5-trimethyl-5-isocyanate cyclohexane, 2,4-hexahydro toluene diisocyanate, 1,3-hexahydro phenyl diisocyanate, 1,4-hexahydro phenyl diisocyanate, perhydrogenated diphenylmethane-2,4- diisocyanate, perhydrogenated diphenylmethane-4,4-diisocyanate, phenylene 1,3- diisocyanate, phenylene 1,4- diisocyanate, dureene-1,4- diisocyanate, 3,3-dimethyl-4,4-diphenyl diisocyanate, methyl-2,4-diisocyanate(TDI), methyl-2,6- diisocyanate(TDI), diphenylmethane-2,4' - diisocyanate(MDI), diphenylmethane-4,4' - diisocyanate(MDI), naphthylene-1,5- diisocyanate(NDI), the mixtures thereof, the isomer thereof, the mixtures of them and the isomer thereof.

The polyisocyanate may also include polyisocyanate modified by carbon diamine, allophanate and isocyanate, preferably but is not limited to diphenylmethane diisocyanate modified by diphenylmethane diisocyanate and allophanate, their compound, their isomer, the compounds of polyisocyanate and their isomer.

The polyisocyanates also can be isocyanate prepolymer. The method of preparing the isocyanate prepolymer is well-known in technical field. The prepolymer NCO% is, preferably but not limit to 3-31 wt.%, more preferably 5-30 wt.%, most preferably 8-29 wt.%.

The B2 component mainly comprise of (2b) polyol, (2c) chain extender and (2d) blowing agent.

The polyol can be one polyol or mixtures of different polyol. The average molecular weight of the polyol is, preferably 100-10000, more preferably 150-2000; the functionality is, preferably 1-5, more preferably 2-3.

The polyol is preferably, but not limited to, small molecular weight polyol, polyester polyol, polyether polyol, polycarbonate polyol, PTMEG and their mixtures.

The small molecular weight polyol is, preferably ethylene glycol, 1,2-propylene glycol, 1,3-propylene glycol, diethylene glycol, TMP and their mixtures.

The polyether polyols may be produced by known process, e.g. in the reaction of alkene oxides with polyhydric alcohol starters in the presence catalysts such as alkali hydroxides, alkali alkoxides, antimony pentachloride, or boron fluoride etherate. Examples of the alkene oxides include tetrahydrofuran, ethylene oxide, 1,2-propylene oxide, 1,2-and 2,3-butylene oxide, and styrene oxide. The polyether polyols preferably have primary OH terminal groups, and secondary OH groups may also exist. The suitable starter molecules may be selected from polyhydric compounds, such as water, ethylene glycol, 1,2-and 1,3-propanediols, 1,4-butanediol, diethylene glycol, trimethylol-propane. The polyether polyol molecular weight is 200-8000, preferably 500-6000, functionality is 2-6, preferably 2-4. The polyether polyol is, preferably poly(propylene oxide) polyol, poly(ethylene oxide) polyol, PTMEG and their mixtures.

The polyester polyols may be produced from the reaction of organic dicarboxylic acids or dicarboxylic acid anhydrides with polyhydric alcohols. The dicabrboxylic acids are, preferably aliphatic carboxylic acids containing 2 to 12 carbon atoms, for example, succinic acid, malonic acid, glutaric acid, adipic acid, suberic acid, azelaic acid, sebacic acid, decane-dicarboxylic acid, maleic acid, fumaric acid, phthalic acid, isophthalic acid, and terephthalic acid. The dicarboxylic acids can be used both individually and as their compounds. The suitable anhydrides are, for example, phthalic anhydride, terachlorophthalic anhydride, and maleic anhydride. Representative polyhydric alcohols include ethanediol, diethylene glycol, 1,2-and 1,3-propanediols, dipropylene glycol, 1,3-methylpropanediol, 1,4-butanediol, 1,5-pentanediol, 1,6-hexanediol, neopentyl glycol, 1,10-decanediol, glycerol, trimethylol-propane, or compounds of at least two of these diols. Polyester polyols of lactones, for example, ε-caprolactone, can also be used.

The chain extenders are typically selected from active hydrogen atoms comprising compounds with molecular weights lower than 800, preferably from 18 to 400. The active hydrogen atoms comprising compounds is preferably, but not limited to alkanediols, dialkylene glycols, and polyalkylene polyols and their mixtures. The examples are ethanediol, 1,4-butanediol, 1,6-hexanediol, 1,7-heptanediol, 1,8-octanediol, 1,9-nonanediol, 1,10-decanediol, diethylene glycol, dipropylene glycol, and polyoxyalkylene glycols. Other suitable substances are branched chain and unsaturated alkanediols such as 1,2-propanediol, 2-methyl-1,3-propanediol, 2,2-dimethyl-1,3-propanediol, 2-butyl-2-ethyl-1,3-propanediol, 2-butene-1,4-diol and 2-butyne-1,4-diol, alkanolamines and N-alkyldialkanolamines such as ethanolamine, 2-aminopropanol and 3-amino-2,2-dimethylpropanol, N-methyl and N-ethyl-diethanolamines, as well (cyclo) aliphatic and aromatic amines, e.g. 1,2 ethylenediamine, 1,3-propylenediamine, 1,4-butylenediamine, 1,6-hexamethylenediamine, isophoronediamine, 1,4-cyclohexamethylenediamine, N,N -diethyl-phenylenediamine, and 2,4 and 2,6 diaminotolune. The chain extender dosage is 0-40 wt.%, preferably 0-25 wt.%, more preferably 0-20wt.%, the dosage is based on 100 wt.% of component B2.

The B2 component can also comprise blowing agent and catalyst.

The blowing agent can be selected from water, halohydrocarbon and hydrocarbon and gas. The halohydrocarbon is preferably, but not limited to, monochlorodifuloromethane, dichloromonofluoromethane, dichlorofluoromethane, trichlorofluromethane and the mixtures thereof The hydrocarbon is preferably, but not limited to butane, pentane, cyclopentane, hexane, cyclohexane, heptane and the mixtures thereof The gas is preferably, but not limited to, air, carbon dioxide, nitrogen and mixtures thereof The amount of the blowing agent is 0-15 wt.%, based on 100 wt.% of component 2b and 2c.

The catalyst is preferably, but not limited to, amines and organic metal compounds and their mixtures. The amine catalyst is preferably, but not limited to, triethylamine, tributylamine, triethylene diamine, N-ethylmorpholine, N,N,N',N'-tetramethyl-ethylenediamine, pentamethyl diethylene-triamine, N,N-methylaniline, N,N-dimethylaniline and mixtures thereof. The organic metal catalyst is preferably, but not limited to, stannous diacetate, stannous dioctoate, stannous diethylhexoate, and dibutyltin diacetate, dibutyltin dilaurate, ditutyltin maleate, and dioctyltin diacetate and mixtures thereof. The catalyst dosage is 0.001-10wt.% of the dosage, based on 100 wt.% of component 2b and 2c.

The molding polyurethane layer provided by the present invention is the product of the first reaction system, while the NCO index of the reaction is 70-130, and the NCO index is defined as:

$$X(\%) = \frac{[\text{moles number of isocyanate group in A component}]}{[\text{moles number of isocyanate} - \text{reactive group in B component}]} \times 100\%$$

The density of the molding polyurethane layer is 100-600 kg/m$^3$, hardness is 10-80 Shore A, tensile strength is 0.1-10 MPa, elongation at break is 30-750 %, and compressive strength (10%) is 1.0-1000 kPa.

## Examples

The examples and methods disclosed in the present invention are illustrative only and not intended to be limiting.

The raw materials used in the present invention

ARCOL 1362: polyether polyol, OH number: 28, Viscosity: 1200 mPa • s at 25 °C, available from Bayer MaterialScience Company.

ARCOL 3553: polyether polyol, OH number: 35, Viscosity: 900 mPa • s at 25 °C, available from Bayer MaterialScience Company.

Bayflex CE 8070: chain extender, OH number: 1610, Viscosity: 20 mPa • s at 20 °C, available from Bayer MaterialScience Company.

Bayflex 12BX012: polyether polyol system, OH number: 102, Viscosity: 1050 mPa • s at 25 °C, available from Bayer MaterialScience Company.

Baydur EF4006: polyether polyol system, OH number: 300, Viscosity: 2000mPa • s at 25 °C, available from Bayer MaterialScience Company.

Baydur EF4002: polyether polyol system, OH number: 271, Viscosity: 2500mPa • s at 25 °C, available from Bayer MaterialScience Company.

Baydur 69BD001: polyether polyol system, OH number: 515, Viscosity: 1450mPa • s at 25 °C, available from Bayer MaterialScience Company.

Baydur 79BD002: polyether polyol system, OH number: 420, Viscosity: 1400mPa • s at 25 °C, available from Bayer MaterialScience Company.

Baydur EF0801: polyether polyol system, OH number: 370, available from Bayer MaterialScience Company.

Baydur 89BD001: polyether polyol system, available from Bayer MaterialScience Company.

Desmodur PF: isocyanate prepolymer, NCO%: 23.0 %, viscosity: 600 mPa • s at 25 °C, available from Bayer MaterialScience Company.

Desmodur 20IK10: isocyanate prepolymer, NCO%: 28.5 %, viscosity: 3300 mPa • s at 25 °C, available from Bayer MaterialScience Company.

Desmodur 18IF19: isocyanate prepolymer, NCO%: 25.0 %, viscosity: 700 mPa • s at 25 °C, available from Bayer MaterialScience Company.

Desmodur 44P01: isocyanate prepolymer, NCO%: 29.0 %, viscosity: 140 mPa •s at 25 °C, available from Bayer MaterialScience Company.

Desmodur 0926: isocyanate prepolymer, NCO%: 19.9 %, viscosity: 1390 mPa • s at 20 °C, available from Bayer MaterialScience Company.

Desmodur 1506: isocyanate prepolymer, NCO%: 28.3 %, viscosity: 125 mPa • s at 25 °C, available from Bayer MaterialScience Company.

Desmodur 1511L: polyisocyanates, NCO%: 31.5 %, viscosity: 120 mPa • s at 25 °C, available from Bayer MaterialScience Company.

Desmodur 44V10: polyisocyanates, NCO%: 31.5 %, viscosity: 120 mPa • s at 25 °C, available from Bayer MaterialScience Company.

Desmophen 2003E: polyester polyol system, OH number: 56, Viscosity: 560mPa • s at 75 °C, available from Bayer MaterialScience Company.

Dabco 33LV: diamine catalyst, available from Air Products.

DABCO DC193: surfactant, available from Air Products.

Hyperlite E-851: graft polyether polyol, OH number: 18.5, white color high viscosity liquid, available from Bayer MaterialScience Company.

Terathane 2000: PTMEG, OH number: 56, Viscosity: 1200 mPa • s at 40 °C, available from Bayer MaterialScience Company.

HK 1250 regular high pressure pouring machine: available from Hennecke. H-XP3 regular high pressure spraying machine: available from GRACO. PU20J-R/Y regular low pressure pouring foaming machine: available from Zhejiang Wenzhou Feilong.

The present invention will be further described by the following examples.

Example 1

Components Desmodur 18IF19 and Bayflex 12BX012 of the first reaction system were poured into a mold (temperature 35-50 °C) with ballasts, drainage mats and structure reinforcement material by HK 1250 regular high pressure pouring machine. The two components reacted, foamed and cured to produce a molding polyurethane layer. The amount of the two components and the physical properties of the resulted molding polyurethane layer were listed in table 1-1.

Table 1-1

| Item | Unit | Material properties/test standard | Formula 1-1 | Formula 1-2 |
|---|---|---|---|---|
| Bayflex 12BX012 | Parts by weight (pbw) | Temperature 25-40°C | 100 | 100 |
| Desmodur 18IF19 | pbw | Temperature 25-40°C | 44 | 44 |
| Physical properties | | | | |
| Foam density | kg/m$^3$ | DIN EN ISO 845 | 400 | 600 |
| Hardness | Shore A | DIN 53505 | 70 | 80 |
| Tensile strength | KPa | DIN EN ISO 527-2 | 1101 | 2557 |
| Elongation at break | % | DIN EN ISO 527 | 119 | 132 |
| Tear strength | kN/m | DIN 53515 | 7.5 | 9.2 |
| Compress strength (10%) | kPa | DIN EN ISO 178 | 101 | 269 |

As shown in Example 1, the molding polyurethane layer provided by the present invention had high hardness and stiffness. The molding polyurethane layer having a density more than 400 kg/m$^3$ can be used as a transition section of high stiffness ballast-free track bed and low stiffness ballast track bed, or be directly used in molding polyurethane ballast track bed.

Example 2

Components of the first reaction system as listed in table 2-1 were poured into a mold (temperature 35-50 °C) with ballasts, drainage mats and structure reinforcement material by PU20J-R/Y regular low pressure pouring machine. All components reacted, foamed and cured to produce a molding polyurethane layer. The amount of all the components and the physical properties of the resulted molding polyurethane layer were listed in table 2-1.

Table 2-1

| Material | Unit | Material properties/test standard | Formula 2-1 | Formula 2-2 | Formula 2-3 | Formula 2-4 | Formula 2-5 | Formula 2-6 |
|---|---|---|---|---|---|---|---|---|
| Arcol 1362 | pbw | Temperature 30°C | 74 | 74 | 74 | 74 | 74 | 74 |
| Hyperlite E-851 | pbw | Temperature 30°C | 16.5 | 16.5 | 16.5 | 16.5 | 16.5 | 16.5 |
| Ethylene glycol | pbw | Temperature 30°C | 7.5 | 7.5 | 7.5 | 7.5 | 7.5 | 7.5 |
| 1,4-butanediol | pbw | Temperature 30°C | 1.0 | 1.0 | 1.0 | 1.0 | 1.0 | 1.0 |
| 33LV | pbw | Temperature 30°C | 0.6 | 0.6 | 0.6 | 0.6 | 0.6 | 0.6 |
| water | pbw | Temperature 30°C | 0.4 | 0.4 | 0.4 | 0.4 | 0.4 | 0.4 |
| Desmodur PF | pbw | Temperature 30°C | 68 | 70 | 74 | 78 | 80 | 82 |
| Physical properties | | | | | | | | |
| Foam density | kg/m$^3$ | DIN EN ISO 845 | 490 | 500 | 500 | 500 | 500 | 480 |
| Hardness | Shore A | DIN 53505 | 48-52 | 50-57 | 53-57 | 58-63 | 60-66 | 57-63 |
| Tensile strength | MPa | DIN EN ISO 527-2 | 1.7 | 2.7 | 2.9 | 2.9 | 3.0 | 2.5 |
| Elongation at break | % | DIN EN ISO 527 | 131.0 | 150.0 | 120.0 | 125.0 | 130.0 | 120.0 |
| Tear strength | kN/m | DIN 53515 | 17.5 | 20.3 | 14.3 | 17.3 | 18.4 | 15.9 |
| Compress strength (10%) | kPa | DIN EN ISO 178 | 214 | 245 | 266 | 258 | 250 | 245 |

As shown in Example 2, the hardness and stiffness of molding polyurethane track bed can be changed by adjusting amounts of the components to fulfill the actual requirements of different type railway track bed.

Example 3

A mixture was obtained by mixing 100 pbw Desmophen 2003E (temperature 30-50 °C) and 15 pbw Bayflex CE 8070 (temperature 30-50 °C).

The resulted mixture (100 pbw, temperature 35-50 °C) and Desmodur 0926 (100 pbw, temperature 35-50 °C) were poured into a mold (temperature 50-60 °C) with ballasts, drainage mats and structure reinforcement material inside by PU20J-R/Y regular low pressure pouring machine. All components reacted, foamed and cured to produce a molding polyurethane layer. The physical properties of the resulted molding polyurethane layer were listed in table 3-1.

Table 3-1

| Material | Unit | Material properties/test standard | Formula 3-1 | Formula 3-2 |
|---|---|---|---|---|
| Polyester system | pbw | Temperature 30-50°C | 100 | 100 |
| Desmodur 0926 | pbw | Temperature 30-50°C | 100 | 100 |
| Physical properties | | | | |
| Foam density | kg/m$^3$ | DIN EN ISO 845 | 250 | 450 |
| Hardness | Shore A | DIN 53505 | 40 | 65 |
| Tensile strength | MPa | DIN EN ISO 527-2 | 2.1 | 5.5 |
| Elongation at break | % | DIN EN ISO 527 | 380 | 400 |
| Tear strength | kN/m | DIN 53515 | 2.9 | 7 |

As shown in Example 3, the molding polyurethane layer based on polyester polyol has good tensile strength and can be used to produce molding polyurethane railway track bed of different density and/or hardness, which is particularly applicable to railway in desert area or heavy haul railway.

Example 4

Components of the first reaction system as listed in table 4-1 were poured into a mold (temperature 50-60 °C) with ballasts, drainage mats and structure reinforcement material inside by HK 1250 regular high pressure pouring machine. All components reacted, foamed and cured to produce a molding polyurethane layer. The amount of all the components and the physical properties of the resulted molding polyurethane layer were listed in table 4-1.

Table 4-1

| Item | Unit | Material properties/test standard | Formula 4-1 | Formula 4-2 | Formula 4-3 | Formula 4-4 |
|---|---|---|---|---|---|---|
| Terathane 2000 | pbw | Temperature 30-40°C | 92 | 92 | 92 | 92 |
| 1,4-butanediol | pbw | Temperature 30-40°C | 4.0-6.0 | 4.0-6.0 | 4.0-6.0 | 4.0-6.0 |
| 33LV | pbw | Temperature 30-40°C | 1.0 | 1.0 | 1.0 | 1.0 |
| water | pbw | Temperature 30-40°C | 0.12 | 0.12 | 0.12 | 0.12 |
| Desmodur PF | pbw | Temperature 30-40°C | 46 | 46 | 46 | 46 |
| Physical properties | | | | | | |
| Density | kg/m$^3$ | DIN EN ISO 845 | 300 | 700 | 780 | 1000 |
| Hardness | Shore A | DIN 53505 | 59 | 62 | 50 | 80 |
| Tensile strength | MPa | DIN EN ISO 527 | 1.3 | 8.2 | 3.2 | 32 |

(continued)

| Item | Unit | Material properties/test standard | Formula 4-1 | Formula 4-2 | Formula 4-3 | Formula 4-4 |
|---|---|---|---|---|---|---|
| Elongation at break | % | DIN EN ISO 527 | 400 | 480 | 400 | 420 |
| Tear strength | kN/m | DIN 53515 | 10 | 22 | 17 | 33 |
| Flexural strength (30 °C) | MPa | DIN EN ISO 178 | 1.8 | --- | --- | --- |
| Flexural strength (-40 °C) | MPa | DIN EN ISO 178 | 3.8 | --- | --- | --- |
| Brittleness | °C | Temperature when sample broken 50% | -70 | --- | --- | --- |

As shown in Example 4, the molding polyurethane layer based on polytetrahydrofuran polyol has good low temperature resistance and can be used to produce molding polyurethane railway track beds of different density and/or hardness, which is particularly applicable to railway in high-altitude and high-cold area.

Example 5

Components of the first reaction system as listed in table 5-1 were poured into a mold (temperature 50-60 °C) with ballasts, drainage mats and structure reinforcement material by HK 1250 regular high pressure pouring machine. All components reacted, foamed and cured to produce a molding polyurethane layer. The amount of all the components and the physical properties of the resulted molding polyurethane layer were listed in table 5-1.

Table 5-1

| Material | Unit | Material properties/test standard | Formula 5-1 |
|---|---|---|---|
| Baydur 89BD001 | pbw | Temperature 25 °C | 100 |
| Desmodur 1511 | pbw | Temperature 25 °C | 97 |
| Physical properties | | | |
| Density | kg/m$^3$ | DIN EN ISO 845 | 1180 |
| Hardness | Shore D | DIN 53505 | 80 |
| Tensile strength | MPa | DIN EN ISO 527-2 | 43 |
| Elongation at break | % | DIN EN ISO 527 | 11 |
| Flexural strength | MPa | DIN EN ISO 178 | 60 |
| Flexural modulus | MPa | DIN EN ISO 178 | 1300 |
| Impact strength | KJ/m$^2$ | DIN EN ISO 179 | 31 |
| Compress strength | N/mm$^2$ | DIN 53421 | 55 |

As shown in Example 5, the molding polyurethane layer based on Baydur 89BD001 has higher hardness and tensile strength and can be used as the transition section of high speed railway between ballast-free railway and ballast railway on bridge or in tunnel.

Example 6

Components of the first reaction system as listed in table 6-1 were poured into a mold (temperature 50-60 °C) with ballasts, drainage mats and structure reinforcement material by HK 1250 regular high pressure pouring machine.

The polyol component comprised 80 pbw Arcol 3553, 6.5 pbw ethylene glycol, 0.60 pbw Dabco 33LV, 0.50pbw DABCO DC193, 4-12 pbw Solkane 365 mfc or R-141b; the polyisocyanate component comprised Desmodur 18IF19. All components reacted, foamed and cured to produce a molding polyurethane layer. The amount of all the components and the physical properties of the resulted molding polyurethane layer were listed in table 6-1

Table 6-1

| Material | Unit | Material properties/test standard | Formula 6-1 | Formula 6-2 | Formula 6-3 | Formula 6-4 | Formula 6-5 | Formula 6-6 |
|---|---|---|---|---|---|---|---|---|
| Polyol component | Parts by volume | Temperature 30°C | 100 | 100 | 100 | 100 | 100 | 100 |
| Polyisocyanate component | Parts by volume | Temperature 30°C | 38.5 | 38.5 | 38.5 | 38.5 | 38.5 | 38.5 |
| Physical properties | | | | | | | | |
| Density | kg/m3 | DIN EN ISO 845 | 130 | 150 | 200 | 270 | 300 | 400 |
| Tensile strength | MPa | DIN EN ISO 527-2 | 0.3 | 0.4 | 0.6 | 0.9 | 1.1 | 1.5 |
| Elongation at break | % | DIN EN ISO 527 | 150 | 150 | 140 | 130 | 130 | 120 |
| Compress strength (10%) | kPa | DIN EN ISO 178 | 20 | 50 | 90 | 170 | 180 | 360 |

As shown in example 6, the density, hardness and tensile strength of the molding polyurethane railway track bed provided by present invention all can be adjusted by adjusting the components of the first reaction system and their amount. The molding polyurethane railway track bed can be used as the transition section of high speed railway between ballast-free track and ballast track on bridge or in tunnel.

Example 7

Components of the first reaction system as listed in table 7-1 were poured into a mold (temperature 50-60 °C) with ballasts, drainage mats and structure reinforcement material by HK 1250 regular high pressure pouring machine. The pouring time was less than 4s, the temperature of material is 28-35 °C, and the temperature of the mold is 60-65°C. All components reacted (NCO index is 110), demoulded after 10 minutes to produce a molding polyurethane layer. The physical properties of the resulted molding polyurethane layer were listed in table 7-1.

Table 7-1

| Item | Unit | Material properties/test standard | Formula 7-1 |
|---|---|---|---|
| Baydur 79BD002 | pbw | Temperature 28-35 °C | 100 |
| Desmodur 44V10 | pbw | Temperature 28-35 °C | 113 |
| Physical properties | | | |
| Density | kg/m$^3$ | DIN EN ISO 845 | 1050 |
| Hardness | Shore A | DIN 53505 | 76 |
| Tensile strength | MPa | DIN EN ISO 527-2 | --- |
| Elongation at break | % | DIN EN ISO 527 | 12 |
| Flexural strength | MPa | DIN EN ISO 178 | 58 |
| Flexural modulus | MPa | DIN EN ISO 178 | 2000 |
| Impact strength | KJ/m$^2$ | DIN EN ISO 179 | --- |
| Compress strength | N/mm$^2$ | DIN 53421 | --- |

As shown in Example 7, the molding polyurethane layer based on Baydur 79BD002 had higher hardness and tensile strength, thus can be used in high speed railway as the transition section between ballast-free railway and ballast railway on bridge or in tunnel. Furthermore, the first reaction system based on Baydur 79BD002 has fast reaction speed and short demolding time, so the needed molding polyurethane track bed can be made in short time by large scale production.

Example 8

Components of the first reaction system as listed in table 8-1 were poured into a mold (temperature 55-60 °C) with ballasts, drainage mats and structure reinforcement material by HK 1250 regular high pressure pouring machine. The pouring time was less than 4s. All components reacted (NCO index is 110), foamed and cured to produce a molding polyurethane layer, which was then poured into an airtight mold and demoulded after 10 minutes. The physical properties of the resulted molding polyurethane layer were listed in table 8-1.

Table 8-1

| Material | Unit | Material properties/test standard | Formula 8-1 |
|---|---|---|---|
| Baydur 69BD001 | pbw | Temperature 30-35 °C | 100 |
| Desmodur 44P01 | pbw | Temperature 30-35 °C | 140 |
| Physical properties | | | |
| Density | kg/m$^3$ | DIN EN ISO 845 | 600 |
| Hardness | Shore A | DIN 53505 | 67 |
| Tensile strength | MPa | DIN EN ISO 527-2 | 20 |

(continued)

| Material | Unit | Material properties/test standard | Formula 8-1 |
|---|---|---|---|
| Elongation at break | % | DIN EN ISO 527 | 12 |
| Flexural strength | MPa | DIN EN ISO 178 | 38 |
| Flexural modulus | MPa | DIN EN ISO 178 | 900 |
| Impact strength | KJ/m$^2$ | DIN EN ISO 179 | 15 |
| Compress strength | N/mm$^2$ | DIN 53421 | --- |

As shown in Example 8, molding polyurethane layer based on Baydur 69BD002 had higher hardness and tensile strength, thus can be used in high speed railway as the transition section between ballast-free railway and ballast railway on bridge or in tunnel. Furthermore, the first reaction based on Baydur 69BD001 has fast reaction speed and short demould time, so the needed molding polyurethane track bed can be made in short time by large scale production.

Example 9

Components of the first reaction system as listed in table 9-1 were poured into a mold (temperature 40-60 °C) with ballasts, drainage mats and structure reinforcement material inside by HK 1250 regular high pressure pouring machine. All components reacted (NCO index is 110), foamed and cured to produce a molding polyurethane layer. The physical properties of the resulted molding polyurethane layer were listed in table 9-1.

Table 9-1

| Material | Unit | Material properties/test standard | Formula 9-1 |
|---|---|---|---|
| Baydur EF4002 | pbw | Temperature 25°C | 100 |
| Desmodur 1511 L | pbw | Temperature 25 °C | 75 |
| Physical properties | | | |
| Density | kg/m$^3$ | DIN EN ISO 845 | 1180 |
| Hardness | Shore A | DIN 53505 | 80 |
| Tensile strength | MPa | DIN EN ISO 527-2 | 45 |
| Elongation at break | % | DIN EN ISO 527 | 10 |
| Flexural strength | MPa | DIN EN ISO 178 | 75 |
| Flexural modulus | MPa | DIN EN ISO 178 | 1650 |
| Impact strength | KJ/m$^2$ | DIN EN ISO 179 | 40 |
| Compress strength | N/mm$^2$ | DIN 53421 | 65 |

As shown in Example 9, the molding polyurethane layer based on Baydur EF4002 had higher hardness, tensile strength and flexural strength, thus can be used in high speed railway as the transition section between ballast-free railway and ballast railway on bridge or in tunnel.

Example 10

Components of the first reaction system as listed in table 10-1 were poured into a mold (temperature 40-60 °C) with ballasts, drainage mats and structure reinforcement material inside by PU20J-R/Y regular low pressure pouring machine. All components reacted (NCO index is 110), foamed and cured to produce a molding polyurethane layer, and the gelling time of the system was 120 seconds. The physical properties of the resulted molding polyurethane layer were listed in table 10-1.

Table 10-1

| Item | Unit | Material properties/test standard | Formula 10-1 |
|---|---|---|---|
| Baydur EF0804 | Parts by volume | Temperature 30°C | 100 |
| Desmodur 1506 | Parts by volume | Temperature 30°C | 100 |
| Physical properties | | | |
| Density | kg/m$^3$ | DIN EN ISO 845 | 1180 |
| Hardness | Shore A | DIN 53505 | 80 |
| Tensile strength | MPa | DIN EN ISO 527-2 | 40 |
| Elongation at break | % | DIN EN ISO 527 | 22 |
| Flexural strength | MPa | DIN EN ISO 178 | 55 |
| Flexural modulus | MPa | DIN EN ISO 178 | 1350 |
| Impact strength | KJ/m$^2$ | DIN EN ISO 179 | 57 |
| Compress strength | N/mm$^2$ | DIN 53421 | 55 |

As shown in Example 10, the first reaction system based on Baydur EF4004 has longer reaction time, the gelling time is 120s at 25 °C, the molding polyurethane layer based on Baydur EF4004 has higher hardness and tensile strength, thus can be used in high speed railway as the transition section between ballast-free railway and ballast railway on bridge or in tunnel.

Example 11

Components of the first reaction system as listed in table 11-1 were poured into a mold (temperature 40-60 °C) with ballasts, drainage mats and structure reinforcement material inside by HK 1250 regular high pressure pouring machine. All components reacted (NCO index is 110), foamed and cured to produce a molding polyurethane layer. The physical properties of the resulted molding polyurethane layer were listed in table 11-1.

Table 11-1

| Material | Unit | Material properties/test standard | Formula 11-1 |
|---|---|---|---|
| Baydur EF4006 | pbw | Temperature 25 °C | 100 |
| Desmodur 20IK10 | pbw | Temperature 25°C | 100 |
| Physical properties | | | |
| Density | kg/m$^3$ | DIN EN ISO 845 | 1170 |
| Hardness | Shore A | DIN 53505 | 78 |
| Tensile strength | MPa | DIN EN ISO 527-2 | 35 |
| Elongation at break | % | DIN EN ISO 527 | 10 |
| Flexural strength | MPa | DIN EN ISO 178 | 60 |
| Flexural modulus | MPa | DIN EN ISO 178 | 1150 |
| Impact strength | KJ/m$^2$ | DIN EN ISO 179 | 73 |
| Compress strength | N/mm$^2$ | DIN 53421 | 50 |

As shown in Example 11, the first reaction system based on Baydur EF4006 can react at lower mold temperature, the molding polyurethane layer based on Baydur EF4006 has higher hardness and tensile strength, thus can be used in high speed railway as the transition section between ballast-free railway and ballast railway on bridge or in tunnel.

Example 12

Components of the first reaction system as listed in table 12-1 were poured into a mold (temperature: 60 °C) with ballasts, drainage mats and structure reinforcement material inside by PU20J-R/Y regular low pressure pouring machine. All components reacted (NCO index is 110, and demoulded after 10 minutes), foamed and cured to produce a molding polyurethane layer. The physical properties of the resulted molding polyurethane layer were listed in table 12-1.

Table 12-1

| Material | Unit | Material properties/test standard | Formula 12-1 |
|---|---|---|---|
| Baydur EF 0801 | pbw | Temperature 30°C | 100 |
| esmodur PU 1511 L | pbw | Temperature 30°C | 100 |
| Physical properties | | | |
| Density | kg/m$^3$ | DIN EN ISO 845 | 1180 |
| Hardness | Shore A | DIN 53505 | 80 |
| Tensile strength | MPa | DIN EN ISO 527-2 | 55 |
| Elongation at break | % | DIN EN ISO 527 | 13 |
| Flexural strength | MPa | DIN EN ISO 178 | 58 |
| Flexural modulus | MPa | DIN EN ISO 178 | 2300 |
| Impact strength | KJ/m$^2$ | DIN EN ISO 179 | 47 |
| Compress strength | N/mm$^2$ | DIN 53421 | 68 |

As shown in Example 12, the molding polyurethane layer based on Baydur EF0801 has higher hardness, tensile strength and flexural strength, thus can be used in high speed railway as the transition section between ballast-free railway and ballast railway on bridge or in tunnel. Furthermore, the first reaction system based on Baydur EF0801 has fast reaction speed and short demould time, so the needed molding polyurethane track bed can be made in short time by large scale production.

**Claims**

1. A method for preparing a polyurethane railway track bed, comprising setting a polyurethane molding layer on a railway subgrade, wherein said polyurethane molding layer comprises ballasts and polyurethane molding foam, wherein said ballast is distributed in said polyurethane molding foam, and said polyurethane molding foam is obtainable by mixing the components of a first reaction system comprising:

   1a) one or more polyisocyanates having a general formula of $R(NCO)_n$, wherein R is an aliphatic alkyl group having 2-18 carbon atoms, an aromatic alkyl group having 6-15 carbon atoms or an araliphatic alkyl group having 8-15 carbon atoms, and n is from 2-4;
   1b) one or more polyols having an average molecular weight of 100-10000 and a functionality of 2-4;
   1c) one or more chain extenders; and
   1d) from 0.3-15 % of one or more blowing agents, based on 100 % by weight of 1b and 1c;
   wherein, the density of said polyurethane molding layer is from 200-1200 kg/m$^3$ (DIN EN ISO 845), the hardness of said polyurethane molding layer is 5 Asker C-80 Shore D (DIN 53505), and the tensile strength of said polyurethane molding layer is from 0.3-60 MPa (DIN EN ISO 527-2).

2. The method as claimed in Claim 1, wherein said polyols are selected from the group consisting of polyether polyol, polyester polyol, polycarbonate polyol, polycaprolactone polyol and polytetrahydrofuran polyol.

3. The method as claimed in Claim 1, wherein said polyurethane molding layer further comprises a reinforcement material.

4. The method as claimed in Claim 1, wherein said method further comprises pouring or spraying a second reaction system onto the surface of said polyurethane molding layer laid on said railway subgrade to form a polyurethane foam layer, wherein said second reaction system comprises the following reaction components:

2a) one or more polyisocyanates having a general formula of $R(NCO)_n$, wherein R is an aliphatic alkyl group having 2-18 carbon atoms, an aromatic alkyl group having 6-15 carbon atoms or an araliphatic alkyl group having 8-15 carbon atoms, and n is from 2-4;
2b) one or more polyols having an average molecular weight of 200-10000 and a functionality of 2-6;
2c) one or more chain extenders; and
2d) from 0-15 wt.% of one or more blowing agents, based on 100 % by weight of 2b and 2c.

5.  The method as claimed in Claim 4, wherein said polyols are selected from the group consisting of polyether polyol, polyester polyol, polycarbonate polyol, polycaprolactone polyol and polytetrahydrofuran polyol.

6.  The method as claimed in any one of Claims 1-5, wherein said method further comprises setting a ballast mat layer and/or a drainage layer between said railway subgrade and said polyurethane molding layer.

7.  A polyurethane railway track bed comprising a railway subgrade and a polyurethane molding layer, wherein said polyurethane molding layer comprises a ballast and a polyurethane molding foam, wherein said ballast is distributed in said polyurethane molding foam, and wherein said polyurethane molding foam is obtainable by mixing the components of a first reaction system comprising:

1a) one or more polyisocyanates having a general formula R(NCO)n, wherein, R is an aliphatic alkyl group comprising 2-18 carbon atoms, an aromatic alkyl group comprising 6-15 carbon atoms or an araliphatic alkyl group having 8-15 carbon atoms, and n is from 2-4;
1b) one or more polyols having an average molecular weight of 100-10000 and a functionality of 2-4;
1c) one or more chain extenders; and
1d) from 0-15 wt.% of one or more blowing agents, based on 100 % by weight of 1b and 1c;
wherein, the density of said polyurethane molding layer is from 200-1200 kg/m$^3$ (DIN EN ISO 845), the hardness of said polyurethane molding layer is 5 Asker C-80 Shore D (DIN 53505), and the tensile strength of said polyurethane molding layer is from 0.3-60 MPa (DIN EN ISO 527-2).

8.  The polyurethane railway track bed as claimed in Claim 7, wherein said polyols are selected from the group consisting of polyether polyol, polyester polyol, polycarbonate polyol, polycaprolactone polyol and polytetrahydrofuran polyol.

9.  The polyurethane railway track bed as claimed in Claim 7, wherein said polyurethane molding layer further comprises a reinforcement material.

10. The polyurethane railway track bed as claimed in Claim 7, wherein said polyurethane railway track bed further comprises a polyurethane foam layer, said a polyurethane foam layer is obtainable by mixing the components of a second reaction system comprising:

2a) one or more polyisocyanates having a general formula of $R(NCO)_n$, wherein, R is an aliphatic alkyl group having 2-18 carbon atoms, an aromatic alkyl group having 6-15 carbon atoms or an araliphatic alkyl group having 8-15 carbon atoms, and n is from 2-4;
2b) one or more polyols having an average molecular weight of 200-10000 and a functionality of 2-6;
2c) one or more chain extenders; and
2d) from 0-15 wt.% of one or more blowing agents, based on 100 % by weight of 2b and 2c.

11. The polyurethane railway track bed as claimed in Claim 7, wherein said polyols are selected from the group consisting of polyether polyol, polyester polyol, polycarbonate polyol, polycaprolactone polyol and polytetrahydrofuran polyol.

12. The polyurethane railway track bed as claimed in Claim 7, wherein said polyurethane railway track bed comprises a ballast mat layer and/or a drainage layer positioned between said railway subgrade and said molding polyurethane layer.

13. Use of the polyurethane railway track bed as claimed in any one of Claims 7-12 in constructing or maintaining a railway facility.

**14.** A railway facility, wherein said railway facility comprises a polyurethane railway track bed as claimed in any one of Claims 7-12, a rail, a plurality of sleepers, wherein said plurality of sleepers are positioned on said polyurethane railway track bed, and wherein said rail is positioned on said sleepers.

**Patentansprüche**

**1.** Verfahren zur Herstellung eines Polyurethan-Eisenbahngleisbetts, welches das Aufbringen einer Polyurethan-Formschicht auf einem Eisenbahnplanum beinhaltet, wobei die Polyurethan-Formschicht Bettungsmaterial und Polyurethan-Formschaum umfasst, wobei das Bettungsmaterial in dem Polyurethan-Formschaum verteilt wird und der Polyurethan-Formschaum durch Mischen der Komponenten eines ersten Reaktionssystems erhalten werden kann, welches umfasst:

1a) ein oder mehrere Polyisocyanate mit einer allgemeinen Formel $R(NCO)_n$, wobei R eine aliphatische Alkylgruppe mit 2-18 Kohlenstoffatomen, eine aromatische Alkylgruppe mit 6-15 Kohlenstoffatomen oder eine araliphatische Alkylgruppe mit 8-15 Kohlenstoffatomen ist und n eine Zahl von 2-4 ist;
1b) ein oder mehrere Polyole mit einem mittleren Molekulargewicht von 100-10000 und einer Funktionalität von 2-4;
1c) einen oder mehrere Kettenverlängerer; und
1d) 0,3-15 % eines oder mehrerer Treibmittel, bezogen auf 100 Gew.-% von 1b und 1c;
wobei die Dichte der Polyurethan-Formschicht 200-1200 kg/m$^3$ (DIN EN ISO 845) beträgt, die Härte der Polyurethan-Formschicht 5 Asker C-80 Shore D (DIN 53505) beträgt und die Zugfestigkeit der Polyurethan-Formschicht 0,3-60 MPa (DIN EN ISO 527-2) beträgt.

**2.** Verfahren nach Anspruch 1, wobei die Polyole aus der Gruppe ausgewählt sind, welche aus Polyetherpolyol, Polyesterpolyol, Polycarbonatpolyol, Polycaprolactonpolyol und Polytetrahydrofuranpolyol besteht.

**3.** Verfahren nach Anspruch 1, wobei die Polyurethan-Formschicht ferner ein Verstärkungsmaterial umfasst.

**4.** Verfahren nach Anspruch 1, wobei das Verfahren ferner das Gießen oder Spritzen eines zweiten Reaktionssystems auf die Oberfläche der auf das Eisenbahnplanum aufgebrachten Polyurethan-Formschicht beinhaltet, um eine Polyurethan-Schaumschicht zu bilden, wobei das zweite Reaktionssystem die folgenden Reaktionskomponenten umfasst:

2a) ein oder mehrere Polyisocyanate mit einer allgemeinen Formel $R(NCO)_n$, wobei R eine aliphatische Alkylgruppe mit 2-18 Kohlenstoffatomen, eine aromatische Alkylgruppe mit 6-15 Kohlenstoffatomen oder eine araliphatische Alkylgruppe mit 8-15 Kohlenstoffatomen ist und n eine Zahl von 2-4 ist;
2b) ein oder mehrere Polyole mit einem mittleren Molekulargewicht von 200-10000 und einer Funktionalität von 2-6;
2c) einen oder mehrere Kettenverlängerer; und
2d) 0-15 Gew.-% eines oder mehrerer Treibmittel, bezogen auf 100 Gew.-% von 2b und 2c.

**5.** Verfahren nach Anspruch 4, wobei die Polyole aus der Gruppe ausgewählt sind, welche aus Polyetherpolyol, Polyesterpolyol, Polycarbonatpolyol, Polycaprolactonpolyol und Polytetrahydrofuranpolyol besteht.

**6.** Verfahren nach einem der Ansprüche 1-5, wobei das Verfahren ferner das Aufbringen einer Bettungsmattenschicht und/oder Drainageschicht zwischen dem Eisenbahnplanum und der Polyurethan-Formschicht beinhaltet.

**7.** Polyurethan-Eisenbahngleisbett, welches ein Eisenbahnplanum und eine Polyurethan-Formschicht aufweist, wobei die Polyurethan-Formschicht ein Bettungsmaterial und einen Polyurethan-Formschaum umfasst, wobei das Bettungsmaterial in dem Polyurethan-Formschaum verteilt ist, und wobei der Polyurethan-Formschaum durch Mischen der Komponenten eines ersten Reaktionssystems erhalten werden kann, welches umfasst:

1a) ein oder mehrere Polyisocyanate mit einer allgemeinen Formel $R(NCO)_n$, wobei R eine aliphatische Alkylgruppe mit 2-18 Kohlenstoffatomen, eine aromatische Alkylgruppe mit 6-15 Kohlenstoffatomen oder eine araliphatische Alkylgruppe mit 8-15 Kohlenstoffatomen ist und n eine Zahl von 2-4 ist;
1b) ein oder mehrere Polyole mit einem mittleren Molekulargewicht von 100-10000 und einer Funktionalität von 2-4;

1c) einen oder mehrere Kettenverlängerer; und

1d) 0-15 Gew.-% eines oder mehrerer Treibmittel, bezogen auf 100 Gew.-% von 1b und 1c; wobei die Dichte der Polyurethan-Formschicht 200-1200 kg/m$^3$ (DIN EN ISO 845) beträgt, die Härte der Polyurethan-Formschicht 5 Asker C-80 Shore D (DIN 53505) beträgt und die Zugfestigkeit der Polyurethan-Formschicht 0,3-60 MPa (DIN EN ISO 527-2) beträgt.

8. Polyurethan-Eisenbahngleisbett nach Anspruch 7, wobei die Polyole aus der Gruppe ausgewählt sind, welche aus Polyetherpolyol, Polyesterpolyol, Polycarbonatpolyol, Polycaprolactonpolyol und Polytetrahydrofuranpolyol besteht.

9. Polyurethan-Eisenbahngleisbett nach Anspruch 7, wobei die Polyurethan-Formschicht ferner ein Verstärkungsmaterial umfasst.

10. Polyurethan-Eisenbahngleisbett nach Anspruch 7, wobei das Polyurethan-Eisenbahngleisbett ferner eine Polyurethan-Schaumschicht aufweist, wobei die Polyurethan-Schaumschicht durch Mischen der Komponenten eines zweiten Reaktionssystems erhalten werden kann, welches umfasst:

2a) ein oder mehrere Polyisocyanate mit einer allgemeinen Formel R(NCO)$_n$, wobei R eine aliphatische Alkylgruppe mit 2-18 Kohlenstoffatomen, eine aromatische Alkylgruppe mit 6-15 Kohlenstoffatomen oder eine araliphatische Alkylgruppe mit 8-15 Kohlenstoffatomen ist und n eine Zahl von 2-4 ist;

2b) ein oder mehrere Polyole mit einem mittleren Molekulargewicht von 200-10000 und einer Funktionalität von 2-6;

2c) einen oder mehrere Kettenverlängerer; und

2d) 0-15 Gew.-% eines oder mehrerer Treibmittel, bezogen auf 100 Gew.-% von 2b und 2c.

11. Polyurethan-Eisenbahngleisbett nach Anspruch 7, wobei die Polyole aus der Gruppe ausgewählt sind, welche aus Polyetherpolyol, Polyesterpolyol, Polycarbonatpolyol, Polycaprolactonpolyol und Polytetrahydrofuranpolyol besteht.

12. Polyurethan-Eisenbahngleisbett nach Anspruch 7, wobei das Polyurethan-Eisenbahngleisbett eine Bettungsmattenschicht und/oder eine Drainageschicht aufweist, die zwischen dem Eisenbahnplanum und der Polyurethan-Formschicht positioniert ist.

13. Verwendung des Polyurethan-Eisenbahngleisbetts nach einem der Ansprüche 7-12 beim Bau oder bei der Instandhaltung einer Eisenbahnanlage.

14. Eisenbahnanlage, wobei die Eisenbahnanlage ein Polyurethan-Eisenbahngleisbett nach einem der Ansprüche 7-12, eine Schiene und mehrere Schwellen aufweist, wobei die mehreren Schwellen auf dem Polyurethan-Eisenbahngleisbett positioniert sind und wobei die Schiene auf den Schwellen positioniert ist.

**Revendications**

1. Procédé de préparation d'un lit de voie ferrée en polyuréthane, comprenant la pose d'une couche de moulage de polyuréthane sur une plate-forme de voie ferrée, ladite couche de moulage de polyuréthane comprenant du ballast et de la mousse de moulage de polyuréthane, ledit ballast étant distribué dans ladite mousse de moulage de polyuréthane, et ladite mousse de moulage de polyuréthane pouvant être obtenue en mélangeant les composants d'un premier système réactionnel comprenant :

1a) un ou plusieurs polyisocyanates ayant pour formule générale R(NCO)$_n$, dans laquelle R est un groupe alkyle aliphatique ayant 2-18 atomes de carbone, un groupe alkyle aromatique ayant 6-15 atomes de carbone ou un groupe alkyle araliphatique ayant 8-15 atomes de carbone, et n vaut 2-4 ;

1b) un ou plusieurs polyols ayant un poids moléculaire moyen de 100-10 000 et une fonctionnalité de 2-4 ;

1c) un ou plusieurs agents d'allongement de chaîne ; et

1d) de 0,3 à 15 % d'un ou plusieurs agents d'expansion, rapporté à 100 % en poids de 1b et 1c ; dans lequel la densité de ladite couche de moulage de polyuréthane est de 200-1200 kg/m$^3$ (DIN EN ISO 845), la dureté de ladite couche de moulage de polyuréthane est de 5 Shore D sur Asker C-80 (DIN 53505), et la résistance à la traction de ladite couche de moulage de polyuréthane est de 0,3-60 MPa (DIN EN ISO 527-2).

2. Procédé selon la revendication 1, dans lequel lesdits polyols sont choisis dans le groupe constitué par un polyol de polyéther, un polyol de polyester, un polyol de polycarbonate, un polyol de polycaprolactone et un polyol de polytétrahydrofurane.

3. Procédé selon la revendication 1, dans lequel ladite couche de moulage de polyuréthane comprend en outre un matériau de renforcement.

4. Procédé selon la revendication 1, ledit procédé comprenant en outre le versement ou la pulvérisation d'un deuxième système réactionnel sur la surface de ladite couche de moulage de polyuréthane posée sur ladite plate-forme de voie ferrée pour former une couche de mousse de polyuréthane, ledit deuxième système réactionnel comprenant les composants réactionnels suivants :

2a) un ou plusieurs polyisocyanates ayant pour formule générale R(NCO)$_n$, dans laquelle R est un groupe alkyle aliphatique ayant 2-18 atomes de carbone, un groupe alkyle aromatique ayant 6-15 atomes de carbone ou un groupe alkyle araliphatique ayant 8-15 atomes de carbone, et n vaut 2-4 ;
2b) un ou plusieurs polyols ayant un poids moléculaire moyen de 200-10 000 et une fonctionnalité de 2-6 ;
2c) un ou plusieurs agents d'allongement de chaîne ; et
2d) de 0 à 15 % en poids d'un ou plusieurs agents d'expansion, rapporté à 100 % en poids de 2b et 2c.

5. Procédé selon la revendication 4, dans lequel lesdits polyols sont choisis dans le groupe constitué par un polyol de polyéther, un polyol de polyester, un polyol de polycarbonate, un polyol de polycaprolactone et un polyol de polytétrahydrofurane.

6. Procédé selon l'une quelconque des revendications 1 à 5, ledit procédé comprenant en outre la pose d'une couche de semelle de ballast et/ou d'une couche de drainage entre ladite plate-forme de voie ferrée et ladite couche de moulage de polyuréthane.

7. Lit de voie ferrée en polyuréthane comprenant une plate-forme de voie ferrée et une couche de moulage de polyuréthane, ladite couche de moulage de polyuréthane comprenant un ballast et une mousse de moulage de polyuréthane, ledit ballast étant distribué dans ladite mousse de moulage de polyuréthane, et ladite mousse de moulage de polyuréthane pouvant être obtenue en mélangeant les composants d'un premier système réactionnel comprenant :

1a) un ou plusieurs polyisocyanates ayant pour formule générale R(NCO)$_n$, dans laquelle R est un groupe alkyle aliphatique ayant 2-18 atomes de carbone, un groupe alkyle aromatique ayant 6-15 atomes de carbone ou un groupe alkyle araliphatique ayant 8-15 atomes de carbone, et n vaut 2-4 ;
1b) un ou plusieurs polyols ayant un poids moléculaire moyen de 100-10 000 et une fonctionnalité de 2-4 ;
1c) un ou plusieurs agents d'allongement de chaîne ; et
1d) de 0 à 15 % en poids ou plusieurs agents d'expansion, rapporté à 100 % en poids de 1b et 1c ; dans lequel la densité de ladite couche de moulage de polyuréthane est de 200-1200 kg/m$^3$ (DIN EN ISO 845), la dureté de ladite couche de moulage de polyuréthane est de 5 Shore D sur Asker C-80 (DIN 53505), et la résistance à la traction de ladite couche de moulage de polyuréthane est de 0,3-60 MPa (DIN EN ISO 527-2).

8. Lit de voie ferrée en polyuréthane selon la revendication 7, dans lequel lesdits polyols sont choisis dans le groupe constitué par un polyol de polyéther, un polyol de polyester, un polyol de polycarbonate, un polyol de polycaprolactone et un polyol de polytétrahydrofurane.

9. Lit de voie ferrée en polyuréthane selon la revendication 7, dans lequel ladite couche de moulage de polyuréthane comprend en outre un matériau de renforcement.

10. Lit de voie ferrée en polyuréthane selon la revendication 7, ledit lit de voie ferrée en polyuréthane comprenant en outre une couche de mousse de polyuréthane, ladite couche de mousse de polyuréthane pouvant être obtenue en mélangeant les composants deuxième système réactionnel comprenant :

2a) un ou plusieurs polyisocyanates ayant pour formule générale R(NCO)$_n$, dans laquelle R est un groupe alkyle aliphatique ayant 2-18 atomes de carbone, un groupe alkyle aromatique ayant 6-15 atomes de carbone ou un groupe alkyle araliphatique ayant 8-15 atomes de carbone, et n vaut 2-4 ;
2b) un ou plusieurs polyols ayant un poids moléculaire moyen de 200-10 000 et une fonctionnalité de 2-6 ;
2c) un ou plusieurs agents d'allongement de chaîne ; et

2d) de 0 à 15 % en poids ou plusieurs agents d'expansion, rapporté à 100 % en poids de 2b et 2c.

11. Lit de voie ferrée en polyuréthane selon la revendication 7, dans lequel lesdits polyols sont choisis dans le groupe constitué par un polyol de polyéther, un polyol de polyester, un polyol de polycarbonate, un polyol de polycaprolactone et un polyol de polytétrahydrofurane.

12. Lit de voie ferrée en polyuréthane selon la revendication 7, ledit lit de voie ferrée en polyuréthane comprenant une couche de semelle de ballast et/ou une couche de drainage positionnée entre ladite plate-forme de voie ferrée et ladite couche de moulage de polyuréthane.

13. Utilisation du lit de voie ferrée en polyuréthane selon l'une quelconque des revendications 7 à 12 dans la construction ou l'entretien d'une installation ferroviaire.

14. Installation ferroviaire, ladite installation ferroviaire comprenant un lit de voie ferrée en polyuréthane selon l'une quelconque des revendications 7 à 12, un rail, une pluralité de traverses, ladite pluralité de traverses étant positionnée sur ledit lit de voie ferrée en polyuréthane, et ledit rail étant positionné sur lesdites traverses.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007172590 A

- DE 2305536 A